(19) Europäisches Patentamt
European Patent Office
Office européen des brevets

(11) EP 0 651 702 B1

(12) FASCICULE DE BREVET EUROPEEN

(45) Date de publication et mention de la délivrance du brevet:
**13.03.1996 Bulletin 1996/11**

(21) Numéro de dépôt: **93917693.9**

(22) Date de dépôt: **29.07.1993**

(51) Int Cl.6: **B60C 23/00**

(86) Numéro de dépôt international:
**PCT/EP93/02025**

(87) Numéro de publication internationale:
**WO 94/03338 (17.02.1994 Gazette 1994/05)**

# (54) PROCEDE ET DISPOSITIFS DE DETECTION DE LA MISE EN APPUI D'UN PNEUMATIQUE SUR UN APPUI DE SECURITE

VERFAHREN UND VORRICHTUNG ZUR DETEKTION DES IN FUNKTION TRETENS EINER NOTLAUFFLÄCHE INNERHALB EINES REIFENS

METHOD AND DEVICES FOR SENSING THE ENGAGEMENT OF A TYRE ON A SAFETY RING

(84) Etats contractants désignés:
**DE ES FR GB IT**

(30) Priorité: **03.08.1992 FR 9209645**

(43) Date de publication de la demande:
**10.05.1995 Bulletin 1995/19**

(73) Titulaire: **COMPAGNIE GENERALE DES ETABLISSEMENTS MICHELIN-MICHELIN & CIE**
**F-63040 Clermont-Ferrand Cédex (FR)**

(72) Inventeurs:
- **BATTOCCHIO, Claudio**
  **F-63200 Riom (FR)**
- **DOSJOUB, André**
  **F-63400 Chamalières (FR)**

(74) Mandataire: **Bauvir, Jacques**
**Michelin & Cie,**
**Service SK-PI**
**F-63040 Clermont-Ferrand Cédex (FR)**

(56) Documents cités:
**EP-A- 0 022 096**
**WO-A-91/14586**
**DE-A- 2 905 931**
**DE-A- 3 541 494**
**US-A- 4 262 724**
**US-A- 4 574 267**

- **PATENT ABSTRACTS OF JAPAN vol. 12, no. 227 (M-713)(3074) 28 Juin 1988 & JP,A,63 022 707 (KOMATSU) 30 Janvier 1988**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1)Convention sur le brevet européen).

EP 0 651 702 B1

Printed by Jouve, 75001 PARIS (FR)

## Description

L'invention concerne les conditions de roulage d'un pneumatique équipé d'un appui de sécurité et plus particulièrement, la détection de la mise en appui dudit pneumatique sur ledit appui de sécurité.

La fonction de ces appuis de sécurité qui sont, en général, montés sur la jante à l'intérieur du pneumatique, est de reprendre la charge en cas de défaillance du pneumatique.

La mise en appui du pneumatique sur l'appui de sécurité s'accompagne d'une dégradation plus ou moins marquée de ses performances qui peut ne pas être perceptible par le conducteur à travers le comportement du véhicule.

La durée de vie en fonctionnement de ces appuis de sécurité étant limitée, il est donc essentiel, pour sa sécurité, que le conducteur soit averti dès leur mise en appui pour qu'il puisse se conformer aux instructions de leur fabricant.

Le brevet US 4 262 724 propose un appui de sécurité comportant des sections circonférentielles de rayons variables pour entraîner, en roulage avec appui, une excitation vibratoire au niveau de l'axe de la roue qui alerte le conducteur. Le brevet US 4 157 726 présente un appui de sécurité avec deux méplats situés sur la circonférence extérieure pour créer, outre l'excitation vibratoire précédente, un bruit de roulement susceptible, lui aussi, d'alerter le conducteur.

Ces deux solutions qui dégradent volontairement le comportement du véhicule lors de la mise en appui d'un pneumatique sur son appui de sécurité conviennent bien lorsque la fonction dudit appui est de permettre une non-immobilisation instantanée du véhicule en cas de défaillance dudit pneumatique. En revanche, lorsque la conception de l'appui de sécurité permet son utilisation, à vitesse limitée, sur de longues distances, ces solutions ne sont plus acceptables. Un tel appui de sécurité est présenté par le brevet EP 363 639.

D'autre part, de nombreux dispositifs ont été proposés pour détecter le sous-gonflage d'un pneumatique par l'analyse des vibrations de l'ensemble pneumatique-éléments de suspension mesurées au moyen d'accéléromètres placés sur l'un des éléments de suspension du véhicule. Ces dispositifs suivent l'évolution en fréquence du premier mode vertical de résonance dudit ensemble pneumatique-suspension, aux environs de 10 à 15 Hz, avec la diminution de la pression de gonflage. Un tel dispositif est présenté par exemple dans le brevet US 4 574 267.

Ces dispositifs ne permettent cependant pas de détecter une mise en appui d'un pneumatique sur son appui de sécurité, car cette mise en appui peut être due non seulement à une diminution de la pression de gonflage du pneumatique, mais encore à d'autres causes, telle une surcharge du pneumatique. Il n'y a donc pas de relation directe entre la pression de gonflage d'un pneumatique et sa mise en appui sur un appui de sécurité.

Dans ce qui suit, on entend par "porte-roue" les pièces qui portent effectivement les roues sans autre découplage que les rotations de roulement desdites roues, ainsi que les pièces de suspension directement reliées aux pièces précédentes et dont les déplacements sont similaires.

On entend par "masses non suspendues" toutes les masses non portées par les ressorts de suspension, c'est à dire situées entre les pneumatiques et lesdits ressorts de suspension.

L'invention a pour objet un procédé de détection de la mise en appui d'au moins l'un des pneumatiques d'un véhicule sur un appui de sécurité, caractérisé en ce qu'on détecte l'apparition d'au moins un mode de résonance caractéristique du roulage dudit pneumatique en appui sur ledit appui de sécurité, d'au moins un des éléments qui coopèrent à la suspension de l'habitacle du véhicule, et en ce que ledit mode de résonance caractéristique détecté est un mode de résonance d'ordre supérieur au premier mode de résonance.

Avantageusement les modes de résonance caractéristiques détectés sont situés dans des bandes de fréquences supérieures à 100 Hz.

Selon une forme de mise en oeuvre, on mesure pendant le roulage les accélérations subies par au moins un desdits éléments de suspension.

De façon préférentielle, les mesures d'accélération sont faites sur les porte-roues desdits pneumatiques du véhicule, et il s'agit particulièrement des mesures des accélérations verticales.

L'invention repose sur l'observation que la mise en appui d'un pneumatique sur un appui de sécurité se traduit par l'apparition de modes de résonance du porte-roue caractéristiques du système pneumatique en appui-appui de sécurité-masses non suspendues-ressort de suspension. Mais, le premier mode vertical de résonance de cet ensemble se situe dans une bande de fréquence de l'ordre de 20 Hz inexploitable en raison de signaux d'origine très diverses.

En revanche, les essais réalisés ont montrés que la détection de l'apparition des modes de résonance d'ordres supérieurs était possible et fiable. Ces essais ont aussi montré que l'excitation mécanique de ces systèmes due au simple roulage du véhicule sur une route usuelle est suffisante pour exciter les porte-roues dans les bandes de fréquences correspondant aux modes de résonance caractéristiques du roulage en appui.

Une caractéristique du procédé selon l'invention est que les signaux de mesure des accélérations sont traités, dans au moins une bande de fréquence donnée, de façon à obtenir des grandeurs représentatives des amplitudes desdits signaux dans ladite bande de fréquence ; lesdites grandeurs sont suivies comme grandeurs caractéristiques.

Parmi les grandeurs représentatives de l'amplitude desdits signaux, la valeur efficace convient particulièrement.

Selon une première variante du procédé selon l'invention, la détection est faite par comparaison des grandeurs caractéristiques mesurées simultanément relativement à au moins deux pneumatiques.

Selon une seconde variante le procédé selon l'invention est caractérisé en ce qu'il détecte ladite mise en appui de façon indépendante pour chacun des pneumatiques du véhicule.

Un autre aspect est caractérisé en ce que l'on calcule un facteur de forme du spectre de vibrations dudit porte-roue et on détecte la mise en appui dudit pneumatique lorsque ledit facteur de forme franchit un seuil donné.

Les signaux de mesure des accélérations peuvent être traités, dans deux bandes de fréquence distinctes données $H_1$ et $H_2$, pour obtenir deux grandeurs représentatives des amplitudes desdits signaux dans les deux bandes de fréquence et déterminer le rapport entre lesdites deux grandeurs représentatives $D_1 / D_2$. Ce rapport représente un facteur de forme caractéristique.

L'invention concerne aussi plusieurs dispositifs destinés à mettre en oeuvre le procédé précédent.

Un dispositif de détection de la mise en appui de l'un au moins des pneumatiques d'un véhicule sur un appui de sécurité conformément à la première variante du procédé selon l'invention est remarquable en ce qu'il comporte :

a) des moyens de mesure des accélérations verticales placés aux porte-roues des roues dudit véhicule ;
b) des moyens de filtrage des signaux de mesure dans une bande de fréquence donnée ;
c) des moyens de traitement donnant les valeurs efficaces desdits signaux de mesure, lesdites valeurs efficaces étant suivies comme grandeurs caractéristiques ;
d) des moyens permettant la comparaison entre elles des grandeurs caractéristiques issues simultanément des différents porte-roues pour détecter la mise en appui ;
e) des moyens permettant de transmettre la détection au conducteur du véhicule.

Un dispositif de détection de la mise en appui d'au moins l'un des pneumatiques d'un véhicule sur un appui de sécurité conformément à la seconde variante du procédé de l'invention est caractérisé en ce qu'il comporte :

a) des moyens de mesure des accélérations placés aux porte-roues des roues dudit véhicule ;
b) des moyens de filtrage des signaux de mesure dans deux bandes données de fréquences $F_1$ et $F_2$ ;
c) des moyens de traitement donnant les valeurs efficaces $D_1$ et $D_2$ desdits signaux de mesure ;
d) des moyens permettant d'effectuer, indépendamment pour les mesures de chaque porte-roue, le rapport $D_1 / D_2$ ;
e) des moyens d'analyse desdits rapports permettant de détecter la mise en appui dès que au moins l'un desdits rapports franchit un seuil donné.
f) des moyens permettant de transmettre la détection au conducteur du véhicule.

Les figures jointes illustrent l'invention et ne sont.données qu'à titre d'exemples :

- la figure 1 présente deux spectres des accélérations verticales en fonction de la fréquence avec et sans appui enregistrés sur une route usuelle ;
- la figure 2 présente un schéma de principe du fonctionnement d'un premier type de dispositif de détection ;
- la figure 3 est un schéma synoptique d'un premier mode de réalisation d'un dispositif de détection ;
- la figure 4 est un schéma synoptique d'un second mode de réalisation ;
- la figure 5 est un schéma synoptique d'un troisième mode de réalisation ;
- la figure 6 est un schéma de principe du fonctionnement d'un second type de dispositif de détection ;
- la figure 7 est un schéma synoptique d'un mode de réalisation d'un dispositif de détection du second type.

La figure 1 présente deux spectres des accélérations verticales mesurés pour des pressions de gonflage de 2,0 et 0,2 bar, soit sans appui puis avec appui, pour un pneumatique 175/70 R 13 MXL équipé d'un appui de sécurité de type "LFZ" tel que décrit par le brevet EP 363 639. Le véhicule est une AX RE de marque Citroën.

La bande de fréquence analysée est située entre 40 et 300 Hz. En dessous de 40 Hz se situent les premiers modes verticaux de résonance de l'ensemble pneumatique-éléments de suspension le pneumatique étant normalement gonflé ou en appui sur son appui de sécurité, mais aussi beaucoup de signaux d'origines très diverses, par exemple liés à la fréquence du tour de roue, telles les non-uniformités du pneumatique. Une analyse du spectre en dessous de 40 Hz est ainsi très difficile de façon fiable.

Les spectres de la figure 1 ont été enregistrés lors du roulage du véhicule sur une route usuelle au moyen d'un accéléromètre placé au niveau du porte-roue de la roue du pneumatique.

Ces deux courbes illustrent bien le principe de l'invention :

- lorsque le pneumatique est normalement gonflé, courbe A, on observe que l'amplitude des accélérations verticales mesurées dans la bande de fréquence considérée est notablement plus faible que lorsqu'il est en appui sur son appui de sécurité, courbe B ;
- lorsque le pneu est gonflé à 0,2 bar, courbe B, soit lorsqu'il est en appui sur son appui de sécurité, on voit apparaître un mode de résonance caractéristique vers 200 Hz, alors que l'amplitude des vibrations est nettement moins modifiée vers 100 Hz, cela transforme notablement la forme du spectre de vibrations du porte-roue.

Lorsque l'on effectue des enregistrements similaires aux courbes de la figure 1 sur des routes de rugosités différentes, les spectres des accélérations verticales mesurés aux porte-roues ont des amplitudes différentes, mais les conclusions précédentes demeurent. Les modifications des formes des spectres de vibrations sont aussi similaires quelles que soient la position du pneumatique considéré sur le véhicule, la vitesse et la charge dudit véhicule.

Pour un véhicule dont les quatre pneumatiques sont équipés d'un appui de sécurité, le procédé selon l'invention consiste donc à détecter l'apparition de ce mode de résonance aux environs de 200 Hz, caractéristique du roulage du pneumatique en appui sur l'appui de sécurité, au moyen des mesures d'accélérations verticales faites au niveau des porte-roues des roues des pneumatiques.

Selon une première variante, après filtrage des signaux de mesure issus des quatre accéléromètres pour ne conserver qu'une bande de fréquence encadrant le mode de résonance caractéristique, soit par exemple 140-250 Hz, on détermine leurs valeurs efficaces que l'on va suivre comme grandeurs caractéristiques.

La bande de fréquence du mode de résonance caractéristique est fonction du système pneumatique en appui-appui de sécurité-masses non suspendues-ressorts de suspension. La détermination précise de cette bande de fréquence suivie est à faire avec un essai de roulage avec et sans appui.

La détection de la mise en appui de l'un au moins des pneumatiques du véhicule sur son appui de sécurité est effectuée en comparant entre elles les grandeurs caractéristiques issues simultanément des quatre accéléromètres placés sur les quatre porte-roues du véhicule.

A la figure 2, on voit les quatre porte-roues d'un véhicule, respectivement le porte-roue avant gauche 1 (AVG), le porte-roue avant droit 2 (AVD), le porte-roue arrière gauche 3 (ARG), le porte-roue arrière droit 4 (ARD). Chaque porte-roue est équipé d'un accéléromètre respectivement 11, 12, 13, 14. Les signaux issus desdits accéléromètres sont conduits par l'intermédiaire des lignes 101, 102, 103, 104 aux moyens de filtrage 21 qui sélectionnent leurs spectres dans une bande de fréquence donnée. Les moyens de traitement 31 donnent de façon connue les valeurs efficaces des signaux filtrés. Ces valeurs efficaces sont les grandeurs caractéristiques S1, S2, S3, S4 suivies. Les moyens de comparaison 41 assurent la détection de la mise en appui de l'un au moins des pneumatiques sur son appui de sécurité par comparaison des grandeurs caractéristiques entre elles. Enfin, le signal de détection, en sortie des moyens 41 est transmis au dispositif d'alarme 51 qui avertit le conducteur.

Un schéma synoptique d'un premier dispositif de détection de la mise en appui d'un pneumatique sur son appui de sécurité est présenté à la figure 3. Les moyens de filtrage sont constitués de quatre filtres passe-bande 211, 212, 213, 214 qui donnent respectivement les signaux F1, F2, F3, F4. Les moyens de traitement 31 sont repérés 311, 312, 313, 314.

Les moyens de comparaison 41 comportent :

- un moyen de détermination d'un seuil d'alerte composé d'un additionneur 411 des quatre valeurs efficaces caractéristiques S1, S2, S3, S4 qui donne le signal $\Gamma$ = S1+S2+S3+S4 et d'un diviseur 412 qui effectue le rapport $\Gamma$/N ; N est un nombre compris entre 2 et 3 ;
- quatre comparateurs 421, 422, 423, 424 qui comparent chacune des valeurs caractéristiques à $\Gamma$/N.

Si l'un des signaux de sortie des comparateurs excède le seuil $\Gamma$/N , la roue correspondante est considérée en appui sur l'appui de sécurité.

Le seuil d'alerte $\Gamma$/N varie avec l'amplitude d'excitation. Ce dispositif permet donc de détecter la mise en appui d'au moins un des pneumatiques du véhicule indépendamment de la rugosité de la route.

Un deuxième dispositif est présenté à la figure 4. La fonction des moyens de comparaison 42 est d'effectuer les rapports entre les grandeurs caractéristiques deux à deux afin de détecter une mise en appui lorsque la valeur de l'un quelconque de ces rapports est en dehors d'un intervalle donné.

Ces moyens de comparaison 42 comportent :

- trois multiplexeurs à trois entrées 451, 452, 453 connectés en entrée aux moyens de traitement 312, 313, 314 ;
- deux diviseurs 456, 457 placés en sortie du moyen de traitement 311 et des trois multiplexeurs 451, 452, 453 ;
- deux multiplexeurs 454 et 455 qui ont trois valeurs d'entrée correspondant respectivement aux seuils d'alerte hauts et bas ;
- quatre comparateurs 421, 422, 423, 424 en sortie des deux diviseurs 456, 457 et des deux multiplexeurs 454 et 455.

Le cycle de fonctionnement des moyens de comparaison 42 est le suivant :

- phase 1 : les cinq multiplexeurs 451, 452, 453, 454 et 455 sont en position 1, le diviseur 456 effectue le rapport R1 = S1/S3, le diviseur 457 R2 = S2/S4 ; R1 est ensuite comparé au seuil haut SH1 au moyen du comparateur 421 et au seuil bas SB1 au moyen du comparateur 422 ; R2 est comparé aux mêmes seuils haut ct bas au moyen des comparateurs 423 et 424 ; les rapports entre grandeurs caractéristiques sont effectués relativement aux positions des porte-roues côté par côté ;

- phase 2 : les cinq multiplexeurs 451, 452, 453, 454 et 455 sont en position 2, le diviseur 456 effectue le rapport R1 = S1/S2, le diviseur 457 R2 = S3/S4 ; R1 est ensuite comparé au seuil haut SH2 au moyen du comparateur 421 et au seuil bas SB2 au moyen du comparateur 422 ; R2 est comparé aux mêmes seuils haut et bas au moyen des comparateurs 423 et 424 ; les rapports entre grandeurs caractéristiques sont effectués essieu par essieu ;
- phase 3 : les cinq multiplexeurs 451, 452, 453, 454 et 455 sont en position 3, le diviseur 456 effectue le rapport R1 = S1/S4, le diviseur 457 R2 = S3/S2 ; R1 est ensuite comparé au seuil haut SH3 au moyen du comparateur 421 et au seuil bas SB3 au moyen du comparateur 422 ; R2 est comparé aux mêmes seuils haut et bas au moyen des comparateurs 423 et 424 ; les rapports entre grandeurs caractéristiques sont effectués diagonale par diagonale.

Dès que l'un des rapports précédents se trouve en dehors des intervalles donnés respectivement par les seuils (SH1 et SB1), (SH2 et SB2), (SH3 et SB3), un signal de détection d'appui est transmis au dispositif d'alarme 51. L'alarme transmise comprend tous les éléments nécessaires pour identifier le ou les pneumatiques concernés.

Ce dispositif a l'avantage de permettre de différencier les seuils de détection en fonction du type de rapport concerné : côté par côté, essieu par essieu ou diagonale par diagonale. Cela permet de limiter les alarmes intempestives.

Un troisième dispositif est présenté à la figure 5. Les moyens de comparaison 43 de ce dispositif comportent :

- trois multiplexeurs 461, 462, 463, placés en sortie des moyens de traitement 312, 313, 314 ;
- deux additionneurs 464 et 465, en sortie respectivement du moyen de traitement 311 et du multiplexeur 461, et des deux multiplexeurs 462, 463, on obtient les signaux D1 et D2 ;
- deux moyens 466, 467 pour élever les grandeurs D1 et D2 à la puissance N, on obtient $A = (D1)^N$, $B = (D2)^N$;
- des moyens 468 pour calculer la fonction $$T = \frac{A - B}{A + B};$$
- des moyens 469 pour donner la valeur absolue de T : G = ITI ;
- un comparateur 470 qui compare G à un seuil d'alerte donné.

Le cycle de fonctionnement des moyens de comparaison 43 est le suivant :

- phase 1 : les trois multiplexeurs 461, 462, 463 sont en position 1 ; les deux additionneurs 464 et 465 donnent respectivement D1 = S1+S3 et D2 = S2+S4 ; finalement :

$$G = \left| \frac{(S1+S3)^N - (S2+S4)^N}{(S1+S3)^N + (S2+S4)^N} \right|$$

la comparaison est faite côté par côté ;
- phase 2 : les trois multiplexeurs 461, 462, 463 sont en position 2 ; les deux additionneurs 464 et 465 donnent respectivement D1 = S1+S2 et D2 = S3+S4 ; finalement :

$$G = \left| \frac{(S1+S2)^N - (S3+S4)^N}{(S1+S2)^N + (S3+S4)^N} \right|$$

la comparaison est faite essieu par essieu ;
- phase 3 : les trois multiplexeurs 461, 462, 463 sont en position 3 ; les deux additionneurs 464 et 465 donnent respectivement D1 = S1+S4 et D2 = S3+S2 ; finalement :

$$G = \left| \frac{(S1+S4)^N - (S3+S2)^N}{(S1+S4)^N + (S3+S2)^N} \right|$$

la comparaison est faite diagonalement.

A l'issue de chaque phase, le comparateur 470 compare G avec un seuil d'alerte donné et si nécessaire, transmet l'alerte au conducteur au moyen du dispositif d'alarme 51.

La fonction T permet de normaliser les signaux D1 et D2 et ainsi de s'affranchir de la rugosité de la route.

Le paramètre N fixe la sensibilité du système. N est généralement compris entre 2 et 3. On peut l'envisager inférieur à 1 si le système est trop sensible.

Selon une seconde variante et pour un véhicule dont tous les pneumatiques sont équipés d'un appui de sécurité, le procédé selon l'invention consiste à détecter, indépendamment pour chaque porte-roue du véhicule, la modification de la forme du spectre de vibration du porte-roue due à l'apparition de ce mode de résonance aux environs de 200 Hz caractéristique du roulage du pneumatique en appui sur l'appui de sécurité au moyen des mesures d'accélérations faites au niveau des porte-roues des roues des pneumatiques.

Après filtrage des signaux de mesure issus des quatre accéléromètres pour ne conserver que deux bandes de fréquences la première aux environs de 100 Hz, la seconde encadrant le mode de résonance caractéristique vers 200 Hz, soit par exemple 140-250 Hz, on détermine leurs valeurs efficaces puis le rapport desdites valeurs efficaces que l'on va suivre comme facteur de forme caractéristique. La détection de la mise en appui est transmise au conducteur lorsque ledit facteur de forme franchit un seuil donné.

Les deux bandes de fréquences suivies sont fonctions du système pneumatique en appui-appui de sécurité-masses non suspendues-ressort de suspension. La détermination précise de ces bandes de fréquences est à faire avec un essai de roulage avec et sans appui.

La figure 6 est un second schéma de principe du fonctionnement de dispositifs de détection correspondant à la seconde variante. On voit les quatre porte-roues d'un véhicule 1, 2, 3, 4. Chaque porte-roue est équipé d'un accéléromètre respectivement 11, 12, 13, 14. Les signaux issus desdits accéléromètres sont conduits par l'intermédiaire des lignes 101, 102, 103, 104 aux quatre moyens de détection 61, indépendants pour chaque porte-roue. Le dispositif d'alarme 51 reçoit les signaux d'alerte au moyen des lignes 111, 112, 113, 114 et les transmet au conducteur.

Un schéma synoptique d'un moyen de détection 61 de la mise en appui d'un pneumatique sur son appui de sécurité conformément à la seconde variante est présenté à la figure 7.

Ce moyen de détection 61 comporte :

- deux filtres passe-bande 611, 612, qui donnent respectivement les signaux $F_1$ et $F_2$, correspondants aux deux bandes de fréquences caractéristiques ;
- deux moyens de traitement 613, 614, qui procurent les valeurs efficaces desdits signaux $F_1$ et $F_2$ soient $D_1$ et $D_2$;
- un diviseur 615 qui effectue le rapport $D_1/ D_2$, qui est le facteur de forme caractéristique ;
- un comparateur 616 qui compare ledit facteur de forme à un seuil d'alerte donné.

Ce dispositif et ce procédé de détection ont l'avantage d'effectuer la détection indépendamment pour chaque pneumatique ce qui autorise de très larges tolérances sur les chaînes de mesure d'accélération puisqu'on observe un rapport d'amplitude de composantes d'un signal issu d'un même capteur.

Ce dispositif a aussi l'avantage de pouvoir avertir en cas de mise en appui simultanée de tous les pneumatiques du véhicule. Par conception, pour que la première variante du procédé puisse transmettre une alerte, il faut que l'un au moins des pneumatiques dudit véhicule reste normalement gonflé pour servir de référence.

Pour obtenir de meilleures performances, par exemple une plus grande sensibilité en début d'appui, il est possible de prévoir un seuil et des bandes de fréquences qui varient en fonction de la vitesse.

Les schémas précédents présentent des réalisations au moyen de composants discrets et en sous-entendant un traitement analogique des signaux. Il est bien entendu possible de réaliser des dispositifs conformes à l'invention en choisissant d'assurer tout ou partie des différentes fonctions décrites avec des moyens de traitement numérique des signaux sous le contrôle ou non d'un micro contrôleur.

Les procédés et dispositifs objets de l'invention sont particulièrement destinés à la détection des mises en appui sur leurs appuis de sécurité de pneumatiques équipant des véhicules automobiles à quatre roues ou plus. Ils peuvent aussi être utilisés dans le cas de véhicule à deux roues.

**Revendications**

1. Procédé de détection de la mise en appui d'au moins l'un des pneumatiques d'un véhicule sur un appui de sécurité, caractérisé en ce qu'on détecte l'apparition d'au moins un mode de résonance caractéristique du roulage dudit pneumatique en appui sur ledit appui de sécurité, d'au moins un des éléments qui coopèrent à la suspension de l'habitacle du véhicule, et en ce que ledit mode de résonance caractéristique détecté est un mode de résonance d'ordre supérieur au premier mode de résonance.

2. Procédé de détection selon la revendication 1 caractérisé en ce que les modes de résonances caractéristiques détectés sont situés dans des bandes de fréquences supérieures à 100 Hz.

3. Procédé de détection selon la revendication 2 caractérisé en ce qu'on mesure pendant le roulage les accélérations subies par au moins un desdits éléments de suspension.

4. Procédé de détection selon la revendication 3 caractérisé en ce qu'on mesure les accélérations des porte-roues desdits pneumatiques du véhicule.

5. Procédé de détection selon la revendication 4 caractérisé en ce qu'on mesure les accélérations verticales des porte-roues dudit véhicule.

6. Procédé de détection selon l'une des revendications 3 à 5 caractérisé en ce que les signaux de mesure des accélérations sont traités, dans au moins une bande de fréquence donnée de sorte d'obtenir des grandeurs représentatives de leurs amplitudes dans ladite bande de fréquence, lesdites grandeurs sont suivies comme grandeurs caractéristiques.

7. Procédé de détection selon la revendication 6 caractérisé en ce que les valeurs efficaces des signaux de mesure des accélérations sont suivies comme grandeurs caractéristiques.

8. Procédé de détection selon l'une des revendications 6 et 7 caractérisé en ce que la détection est faite par comparaison des grandeurs caractéristiques mesurées simultanément relativement à au moins deux pneumatiques.

9. Procédé de détection selon la revendication 8 caractérisé en ce que les grandeurs caractéristiques sont suivies dans une bande de fréquence donnée.

**10.** Procédé de détection selon l'une des revendications 6 et 7 caractérisé en ce que la détection est faite de façon indépendante pour chaque pneumatique.

**11.** Procédé de détection selon la revendication 10 caractérisé en ce qu'il calcule un facteur de forme dudit spectre de vibrations dudit élément de suspension et détecte la mise en appui dudit pneumatique lorsque ledit facteur de forme franchit un seuil donné.

**12.** Procédé de détection selon la revendication 11 caractérisé en ce que ledit facteur de forme est calculé en traitant les signaux de mesure des accélérations, dans deux bandes de fréquence données $F_1$ et $F_2$, pour déterminer le rapport de leurs grandeurs caractéristiques $D_1$ / $D_2$.

**13.** Dispositif de détection de la mise en appui de l'un au moins des pneumatiques d'un véhicule sur un appui de sécurité pour la mise en oeuvre du procédé selon la revendication 9 caractérisé en ce qu'il comporte :

a) des moyens de mesure (11, 12, 13, 14) des accélérations verticales placés aux porte-roues (1, 2, 3, 4) des roues dudit véhicule ;
b) des moyens de filtrage (21) des signaux de mesure dans une bande de fréquence donnée ;
c) des moyens de traitement (31) donnant les valeurs efficaces desdits signaux de mesure, lesdites valeurs efficaces étant suivies comme grandeurs caractéristiques ;
d) des moyens (41) permettant la comparaison des grandeurs caractéristiques issues des différents porte-roues (1, 2, 3, 4) entre elles pour détecter la mise en appui ;
e) des moyens (51) permettant de transmettre la détection au conducteur du véhicule.

**14.** Dispositif de détection selon la revendication 13 caractérisé en ce que les moyens (41) permettant la comparaison des grandeurs caractéristiques entre elles comportent :

a) un moyen de détermination d'un seuil d'alerte composé d'un additionneur (411) des quatre valeurs efficaces caractéristiques S1, S2, S3, S4 qui donne le signal $\Gamma$ = S1+S2+S3+S4 et d'un diviseur (412) qui effectue le rapport $\Gamma$/N ; N est un nombre réel donné ;
b) quatre comparateurs (421, 422, 423, 424) qui comparent chacune des valeurs caractéristiques à $\Gamma$/N.

**15.** Dispositif de détection selon la revendication 14 caractérisé en ce que le paramètre N est compris entre 2 et 3.

**16.** Dispositif de détection selon la revendication 13 caractérisé en ce que la fonction des moyens (42) permettant la comparaison des grandeurs caractéristiques entre elles est d'effectuer les rapports entre les grandeurs caractéristiques deux à deux.

**17.** Dispositif de détection selon la revendication 16 caractérisé en ce que la mise en appui d'un pneumatique sur son appui de sécurité est détectée lorsque l'un quelconque des rapports entre les grandeurs caractéristiques deux à deux est en dehors d'un intervalle donné.

**18.** Dispositif de détection selon la revendication 13 caractérisé en ce que les moyens (43) permettant la comparaison des grandeurs caractéristiques entre elles comportent :

a) des moyens permettant d'additionner deux à deux les grandeurs caractéristiques, de sorte que l'on obtient les grandeurs "D1" et "D2" ;
b) des moyens permettant de soustraire et d'additionner lesdites grandeurs "D1" et "D2", de sorte que l'on obtient A = D1 - D2, B = D1 + D2 ;
c) des moyens permettant d'effectuer le rapport entre la valeur absolue de A et B ;
d) des moyens d'analyse desdits rapports permettant de détecter la mise en appui dès que au moins l'un desdits rapports dépasse un seuil donné.

**19.** Dispositif de détection selon la revendication 18 caractérisé en ce que les moyens (43) permettant la comparaison des grandeurs caractéristiques entre elles comportent en plus des moyens (466, 467) permettant d'élever les grandeurs "D1" et "D2" à une puissance N.

**20.** Dispositif de détection selon la revendication 19 caractérisé en ce que la valeur de N règle la sensibilité du dispositif.

**21.** Dispositif de détection de la mise en appui d'au moins l'un des pneumatiques d'un véhicule sur un appui de sécurité, selon le procédé de la revendication 12, caractérisé en ce qu'il comporte :

a) des moyens (11, 12, 13, 14) de mesure des accélérations placés aux porte-roues (1, 2, 3, 4) des roues dudit véhicule ;
b) des moyens de filtrage (611, 612) des signaux de mesure dans deux bandes de fréquences données ;

c) des moyens de traitement (613, 614) donnant les valeurs efficaces $D_1$ et $D_2$ desdits signaux de mesure, lesdites valeurs efficaces étant suivies comme grandeurs caractéristiques ;

d) des moyens (615) permettant d'effectuer, indépendamment pour les mesures de chaque porte-roue, le rapport $D_1$ / $D_2$ des grandeurs caractéristiques issues des différents porte-roues ;

e) des moyens d'analyse (616) desdits rapports permettant de détecter la mise en appui dès que au moins l'un desdits rapports franchit un seuil donné ;

f) des moyens (51) permettant de transmettre la détection au conducteur du véhicule.

**Patentansprüche**

**1.** Verfahren zur Erfassung des Aufsitzens mindestens eines der Reifen eines Fahrzeugs mit einer Notlauffläche, dadurch **gekennzeichnet**, daß man das Auftreten mindestens einer Resonanzschwingung erfaßt, die charakteristisch für das Abrollen des genannten Reifens in Auflage auf der genannten Notlauffläche ist, bei mindestens einem der Elemente, die mit der Aufhängung der Fahrzeugkabine zusammenwirken, und daß die genannte, erfaßte, charakteristische Resonanzschwingung eine Resonanzschwingung einer höheren Ordnung als die erste Resonanzschwingung ist.

**2.** Verfahren zur Erfassung nach Anspruch 1, dadurch **gekennzeichnet**, daß die charakteristischen Resonanzschwingungen in den Frequenzbändern gelegen sind, die über 100 Hz liegen.

**3.** Verfahren zur Erfassung nach Anspruch 2, dadurch **gekennzeichnet**, daß man während des Abrollens die Beschleunigungen mißt, denen mindestens eines der genannten Aufhängungselemente unterzogen wird.

**4.** Verfahren zur Erfassung nach Anspruch 3, dadurch **gekennzeichnet**, daß man die Beschleunigungen der Radträger der genannten Reifen des Fahrzeugs mißt.

**5.** Verfahren zur Erfassung nach Anspruch 4, dadurch **gekennzeichnet**, daß man die vertikalen Beschleunigungen der Radträger des genannten Fahrzeugs mißt.

**6.** Verfahren zur Erfassung nach einem der Ansprüche 3 bis 5, dadurch **gekennzeichnet**, daß die Meßsignale der Beschleunigungen in mindestens einem vorgegebenen Frequenzband derart verarbeitet werden, daß man Größen erhält, die repräsentativ sind für ihre Amplituden im genannten Frequenzband, wobei die genannten Größen als charakteristische Größen weiterverfolgt werden.

**7.** Verfahren zur Erfassung nach Anspruch 6, dadurch **gekennzeichnet**, daß die Effektivwerte bzw. quadratischen Mittelwerte der Meßsignale der Beschleunigungen als charakteristische Größen weiterverfolgt werden.

**8.** Verfahren zur Erfassung nach einem der Ansprüche 6 und 7, dadurch **gekennzeichnet**, daß die Erfassung durch Vergleich charakteristischer Größen durchgeführt wird, die gleichzeitig bezüglich mindestens zweier Reifen gemessen werden.

**9.** Verfahren zur Erfassung nach Anspruch 8, dadurch **gekennzeichnet**, daß die charakteristischen Größen in einem vorgegebenen Frequenzband weiterverfolgt werden.

**10.** Verfahren zur Erfassung nach einem der Ansprüche 6 und 7, dadurch **gekennzeichnet**, daß die Erfassung für jeden Reifen in unabhängiger Weise vorgenommen wird.

**11.** Verfahren zur Erfassung nach Anspruch 10, dadurch **gekennzeichnet**, daß es einen Formfaktor des genannten Schwingungsspektrums des genannten Aufhängungselements berechnet und das Aufsitzen des genannten Reifens erfaßt, wenn der genannte Formfaktor einen vorgegebenen Schwellenwert überschreitet.

**12.** Verfahren zur Erfassung nach Anspruch 11, dadurch **gekennzeichnet**, daß der genannte Formfaktor dadurch berechnet wird, daß man die Meßsignale der Beschleunigungen in zwei vorgegebenen Frequenzbändern $F_1$ und $F_2$ verarbeitet, um das Verhältnis ihrer charakteristischen Größen $D_1/D_2$ zu bestimmen.

**13.** Vorrichtung zur Erfassung des Aufsitzens mindestens eines der Reifen eines Fahrzeugs mit einer Notlauffläche zur Durchführung des Verfahrens nach Anspruch 9, dadurch **gekennzeichnet**, daß sie die folgenden Merkmale aufweist:

a) Mittel (11, 12, 13, 14) zur Messung der vertikalen Beschleunigungen, die an den Radträgern (1, 2, 3, 4) der Räder des genannten Fahrzeugs angeordnet sind;

b) Mittel (21) zur Filterung der Meßsignale in einem vorgegebenen Frequenzband;

c) Mittel (31) zur Verarbeitung, die die Effektivwerte der genannten Meßsignale ergeben, wobei die genannten Effektivwerte als charakteristische Größen weiterverfolgt werden;

d) Mittel (41), die den Vergleich der charakteristischen Größen miteinander gestatten, die von den verschiedenen Radträgern (1, 2, 3, 4) untereinander abgegeben werden, um das Aufsitzen zu erfassen;
e) Mittel (51), die die Übermittlung der Erfassung zum Fahrer des Fahrzeugs gestatten.

**14.** Vorrichtung zur Erfassung nach Anspruch 13, dadurch **gekennzeichnet**, daß die Mittel (41), die dem Vergleich der charakteristischen Größen miteinander gestatten, die folgenden Merkmale aufweisen:

a) eine Einrichtung zur Bestimmung eines Alarm-Schwellenwertes, die zusammengesetzt ist aus einem Addierer (411) für die vier charakteristischen Effektivwerte S1, S2, S3, S4, was das Signal $\Gamma$ = S1+S2+S3+S4 ergibt, und aus einer Divisionseinrichtung (412), die das Verhältnis $\Gamma$/N liefert, wobei N eine vorgegebene, reelle Zahl ist;
b) vier Vergleicher (421, 422, 423, 424), die jeden der charakteristischen Werte mit $\Gamma$/N vergleichen.

**15.** Vorrichtung zur Erfassung nach Anspruch 14, dadurch **gekennzeichnet**, daß der Parameter N zwischen 2 und 3 liegt.

**16.** Vorrichtung zur Erfassung nach Anspruch 13, dadurch **gekennzeichnet**, daß es die Funktion der Mittel (42) ist, die den Vergleich der charakteristischen Größen miteinander gestatten, Verhältnisse zwischen Paaren der charakteristischen Größen zu bewirken.

**17.** Vorrichtung zur Erfassung nach Anspruch 16, dadurch **gekennzeichnet**, daß das Aufsitzen eines Reifens auf seiner Notlauffläche erfaßt wird, wenn irgendeines der Verhältnisse zwischen den Paaren der charakteristischen Größen außerhalb eines vorgegebenen Intervalls liegt.

**18.** Vorrichtung zur Erfassung nach Anspruch 13, dadurch **gekennzeichnet**, daß die Mittel (43), die den Vergleich der charakteristischen Größen miteinander gestatten, die folgenden Merkmale aufweisen:

a) Mittel, die es gestatten, die charakteristischen Größen paarweise derart zu addieren, daß man die Größen "D1" und "D2" erhält;
b) Mittel, die es gestatten, die genannten Größen "D1" und "D2" derart zu substrahieren und zu addieren, daß man A = D1 - D2, B = D1 + D2 erhält;
c) Mittel, die es gestatten, das Verhältnis zwischen dem Absolutwert von A und B herzustellen;
d) Mittel zur Analyse der genannten Verhältnisse, die es gestatten, das Aufsitzen zu erfassen, sobald mindestens eines der genannten Verhältnisse einen vorgegebenen Schwellenwert überschreitet.

**19.** Vorrichtung zur Erfassung nach Anspruch 18, dadurch **gekennzeichnet**, daß die Mittel (43), die den Vergleich der charakteristischen Größen miteinander gestatten, außerdem Mittel (466, 467) aufweisen, die es gestatten, die Größen "D1" und "D2" mit einer Potenz N zu erhöhen.

**20.** Vorrichtung zur Erfassung nach Anspruch 19, dadurch **gekennzeichnet**, daß der Wert von N die Empfindlichkeit der Vorrichtung reguliert.

**21.** Vorrichtung zur Erfassung des Aufsitzens mindestens eines der Reifen eines Fahrzeugs mit einer Notlauffläche, nach dem Verfahren des Anspruchs 12, dadurch **gekennzeichnet**, daß sie die folgenden Merkmale aufweist:

a) Mittel (11, 12, 13, 14) zur Messung von Beschleunigungen, die auf den Radträgern (1, 2, 3, 4) der Räder des genannten Fahrzeugs angeordnet sind;
b) Mittel zur Filterung (611, 612) von Meßsignalen in zwei vorgegebenen Frequenzbändern;
c) Mittel zur Verarbeitung (613, 614), die die Effektivwerte $D_1$ und $D_2$ der genannten Meßsignale ergeben, wobei die genannten wirksamen Werte als charakteristische Größen weiterverfolgt werden;
d) Mittel (615), die es gestatten, unabhängig für die Messungen jedes Radträgers das Verhältnis $D_1/D_2$ charakteristischer Größen herzustellen, die von den verschiedenen Radträgern abgegeben werden;
e) Mittel zur Analyse (616) der genannten Verhältnisse, die es gestatten, das Aufsitzen zu erfassen, sobald mindestens eines der genannten Verhältnisse einen vorgegebenen Schwellenwert überschreitet;
f) Mittel (51), die es gestatten, die Erfassung dem Fahrer des Fahrzeugs zu übermitteln.

## Claims

**1.** A process for detection of the actuation of the support of at least one of the tyres of a vehicle on a safety support, characterised in that the appearance of at least one resonance mode characteristic of the rolling of said tyre supported on said safety support, of at least one of the components involved in the suspension of the passenger compartment of the vehicle is detected, and in that said characteristic resonance mode detected is a resonance mode of a magnitude greater than the first resonance mode.

**2.** A detection process according to claim 1, characterised in that the characteristic resonance modes detected occur within frequency bands exceeding 100 Hz.

**3.** A detection process according to claim 2, characterised in that the acceleration phenomena to which at least one of said suspension components is subjected is measured during travel.

**4.** A detection process according to claim 3, characterised in that the acceleration phenomena of the wheel-carriers of said tyres of the vehicle are measured.

**5.** A detection process according to claim 4, characterised in that the vertical acceleration phenomena of the wheel-carriers of said vehicle are measured.

**6.** A detection process according to one of claims 3 to 5, characterised in that the acceleration-measurement signals are processed in at least one given frequency band, so as to obtain representative magnitudes of their amplitudes in said frequency band, said magnitudes being taken as characteristic magnitudes.

**7.** A detection process according to claim 6, characterised in that the root mean square values of the measurement signals of the acceleration phenomena are taken as characteristic magnitudes.

**8.** A detection process according to one of claims 6 and 7, characterised in that the detection is carried out by comparing the characteristic magnitudes measured simultaneously for at least two tyres.

**9.** A detection process according to claim 8, characterised in that the characteristic magnitudes are monitored in a given frequency band.

**10.** A detection process according to one of claims 6 and 7, characterised in that the detection is carried out independently for each tyre.

**11.** A detection process according to claim 10, characterised in that it calculates a form-factor of said vibration spectrum of said suspension component and detects the actuation of support of said tyre when said form-factor exceeds a given threshold.

**12.** A detection process according to claim 11, characterised in that said form-factor is calculated by processing the acceleration-measurement signals in two given frequency bands $F_1$ and $F_2$, so as to determine the ratio of their characteristic magnitudes $D_1/D_2$.

**13.** A device for the detection of the actuation of the support of at least one of the tyres of a vehicle on a safety support, for the implementation of the process according to claim 9, characterised in that it comprises:

a) measurement means (11, 12, 13, 14) for the vertical acceleration phenomena, positioned at the wheel-carriers (1, 2, 3, 4) of the wheels of said vehicle;
b) means (21) for filtering the measurement signals within a given frequency band;
c) processing means (31) which give the root mean square values of said measurement signals, said root mean square values being taken as characteristic magnitudes;
d) means (41) for comparing the characteristic magnitudes emanating from among the various wheel-carriers (1, 2, 3, 4) so as to detect the actuation of support;
e) means (51) making it possible to transmit the detection to the vehicle driver.

**14.** A detection device according to claim 13, characterised in that the means (41) allowing the comparison among the characteristic magnitudes comprise:

a) a means for determining a warning threshold, comprising an adder (411) of the four characteristic root mean square values S1, S2, S3, S4, which generates the signal $\Gamma = S1+S2+S3+S4$, and a divider (412) which gives the ratio $\Gamma/N$, N being a given real number;
b) four comparators (421, 422, 423, 424) which compare each of the characteristic values to $\Gamma/N$.

**15.** A detection device according to claim 14, characterised in that the parameter N is between 2 and 3.

**16.** A detection device according to claim 13, characterised in that the function of the means (42) allowing comparison of the characteristic magnitudes among themselves consists in calculating the ratios between the paired characteristic magnitudes.

**17.** A detection device according to claim 16, characterised in that the actuation of the support of a tyre on its safety support is detected when any of the ratios between the paired characteristic magnitudes is outside a given range.

**18.** A detection device according to claim 13, characterised in that the means (43) allowing comparison between the characteristic magnitudes comprise:

a) means making it possible to add up the characteristic magnitudes in pairs, thus giving the magnitudes "D1" and "D2";
b) means making it possible to subtract and add said magnitudes "D1" and "D2", so that A = D1 - D2 and B = D1 + D2 are obtained;
c) means making it possible to calculate the ratio between the absolute values of A and B;
d) means for analysing said ratios making it possible to detect the actuation of support as soon as at least one of said ratios exceeds a given threshold.

**19.** A detection device according to claim 18, characterised in that the means (43) permitting comparison of the characteristic magnitudes among themselves further comprise means (466, 467) making it possible to raise the magnitudes "D1" and "D2" to a power N.

**20.** A detection device according to claim 19, characterised in that the value of N governs the sensitivity of the device.

**21.** A device for the detection of the actuation of support of at least one of the tyres of a vehicle on a safety support according to the process of claim 12, characterised in that it comprises:

a) acceleration-measurement means (11, 12, 13, 14) positioned at the wheel-carriers (1, 2, 3, 4) of the wheels of said vehicle;
b) means (611, 612) for filtering the measurement signals in two given frequency bands;
c) processing means (613, 614) giving the root mean square values $D_1$ and $D_2$ of said measurement signals, said root mean square values being monitored as characteristic magnitudes;
d) means (615) making it possible to calculate the ratio $D_1/D_2$ of the characteristic magnitudes emanating from the various wheel-carriers independently for the measurements of each wheel-carrier;
e) means (616) for analysis of said ratios making possible the detection of the actuation of support as soon as at least one of said ratios exceeds a given threshold;
f) means (51) making it possible to transmit the detection results to the driver of the vehicle.

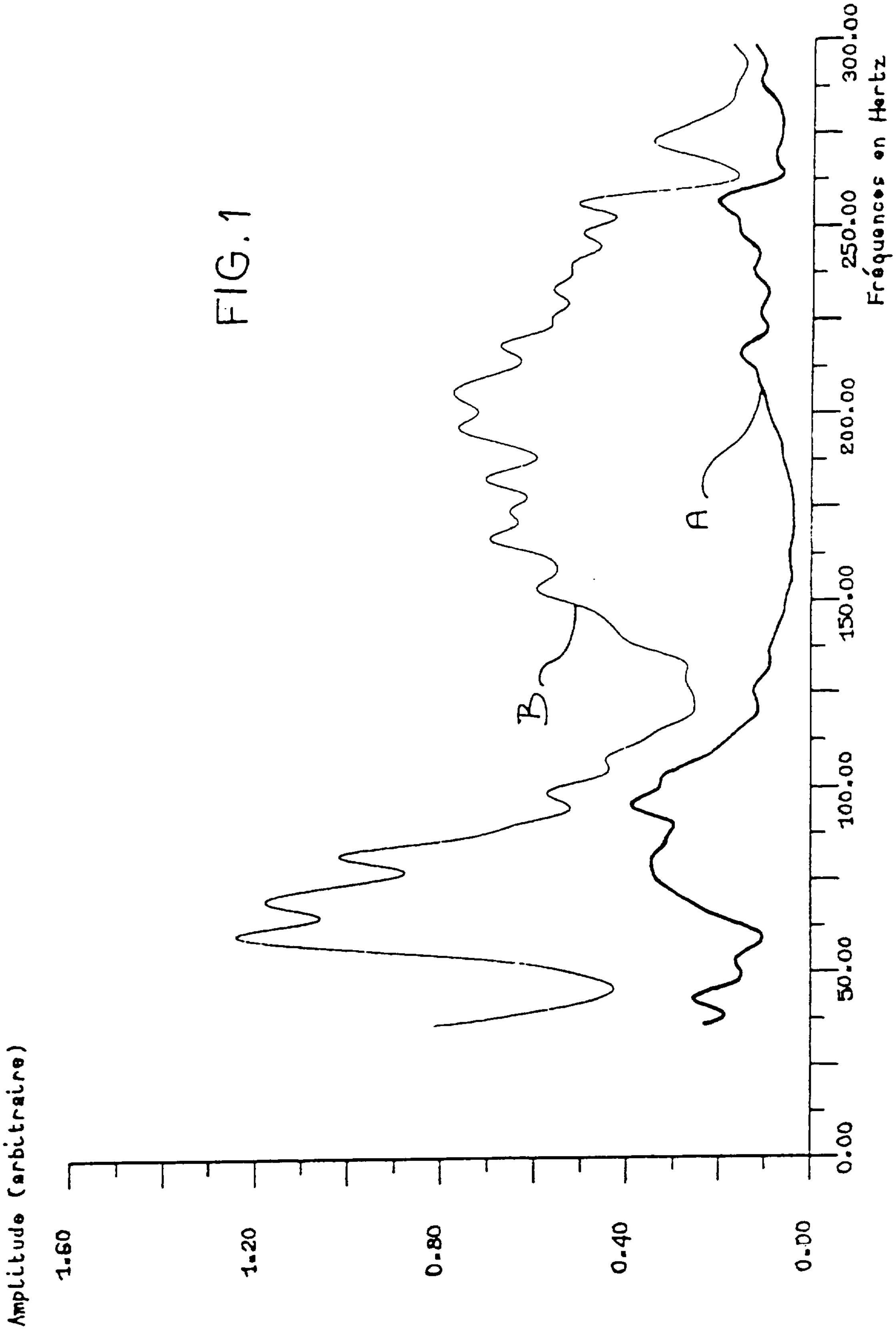

Amplitude (arbitraire)
1.60
1.20
0.80
0.40
0.00
0.00
50.00
100.00
150.00
200.00
250.00
300.00
Fréquences en Hertz
A
B


FIG. 1

FIG.2

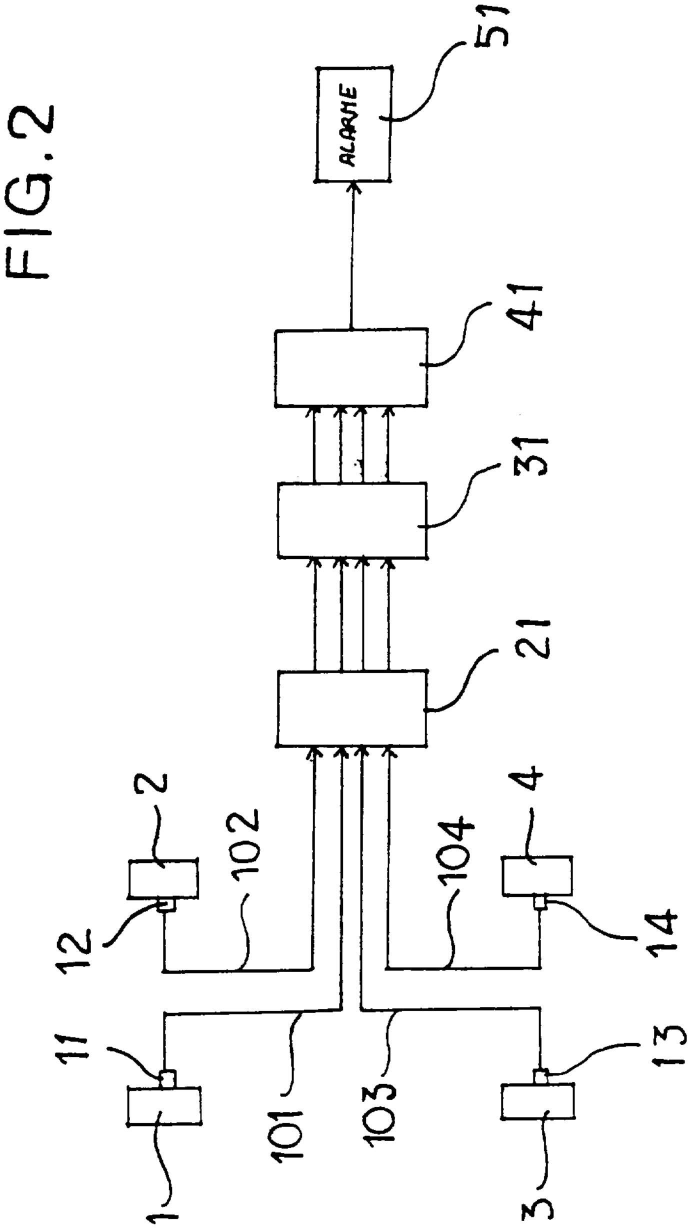

FIG. 3

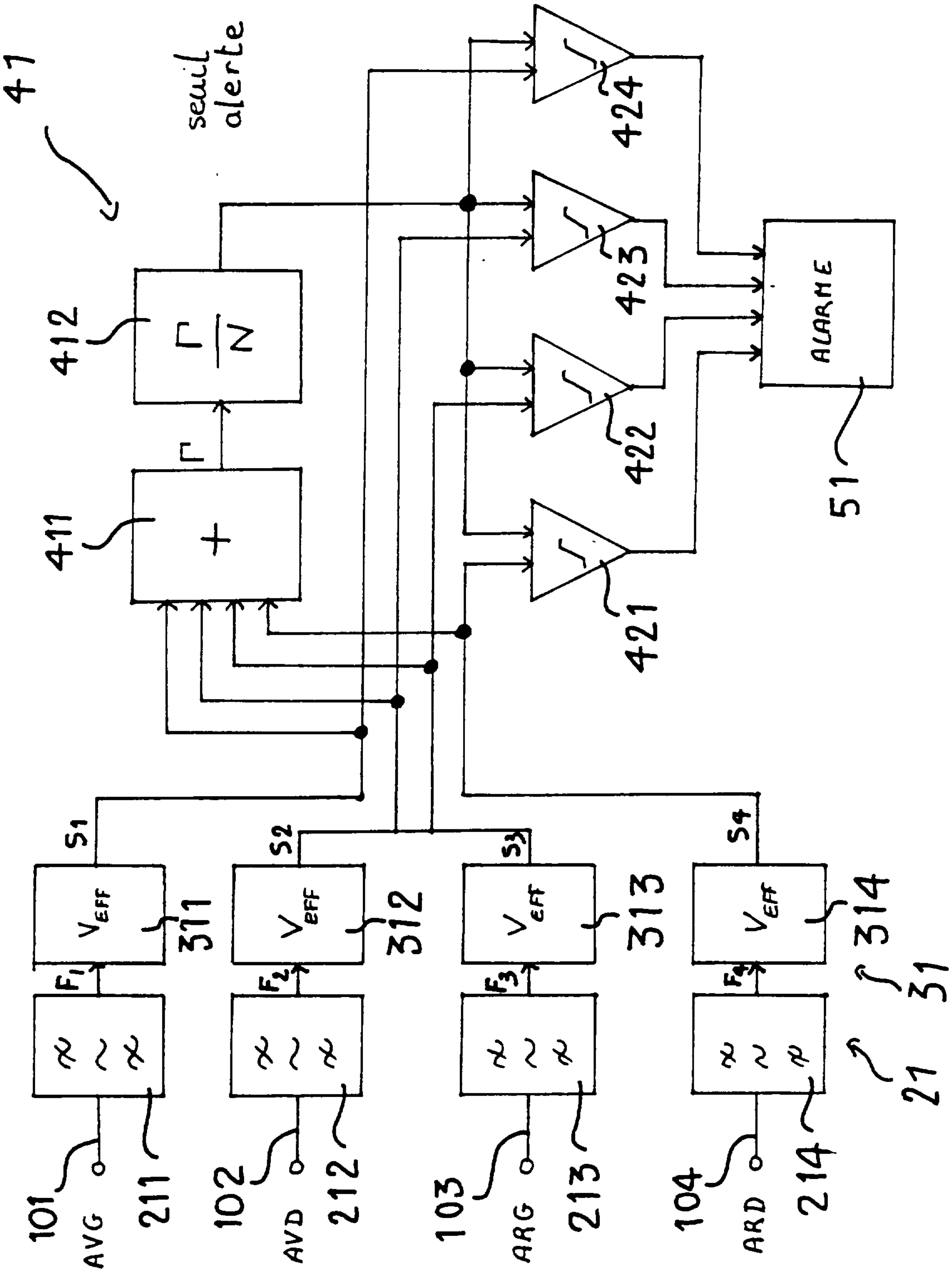
41
seuil
alerte
411
+
Γ
412
Γ/N
421
422
423
424
ALARME
51
S1
S2
S3
S4
F1
F2
F3
F4
311
312
313
314
31
211
212
213
214
21
101
AVG
102
AVD
103
ARG
104
ARD

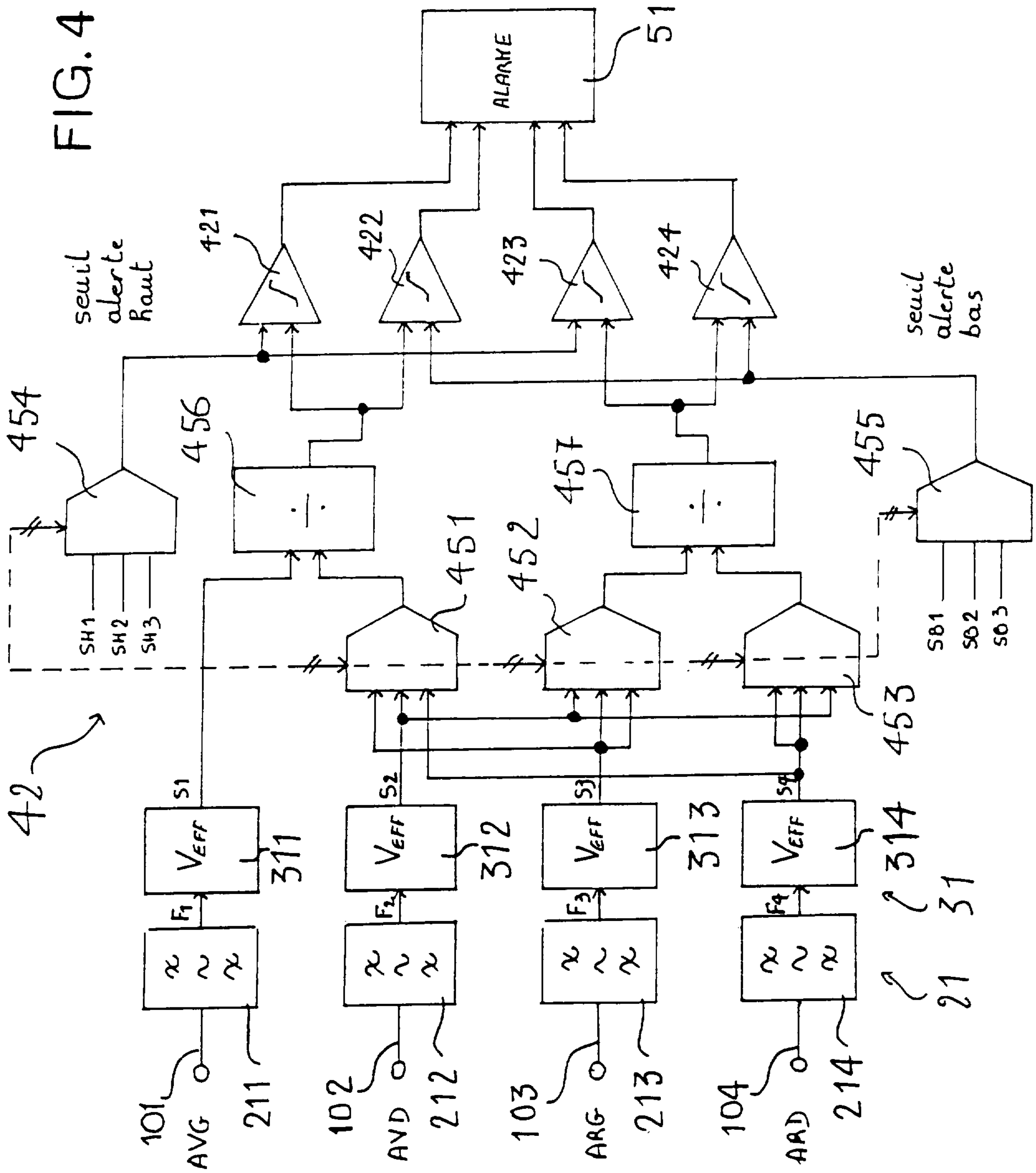
ALARME
51
421
422
423
424
seuil alerte Raut
seuil alerte bas
454
455
456
457
451
452
453
SH1
SH2
SH3
SB1
SB2
SB3
42
S1
S2
S3
S4
$V_{EFF}$
$V_{EFF}$
$V_{EFF}$
$V_{EFF}$
311
312
313
314
31
F1
F2
F3
F4
21
211
212
213
214
101
102
103
104
AVG
AVD
ARG
ARD

FIG. 4

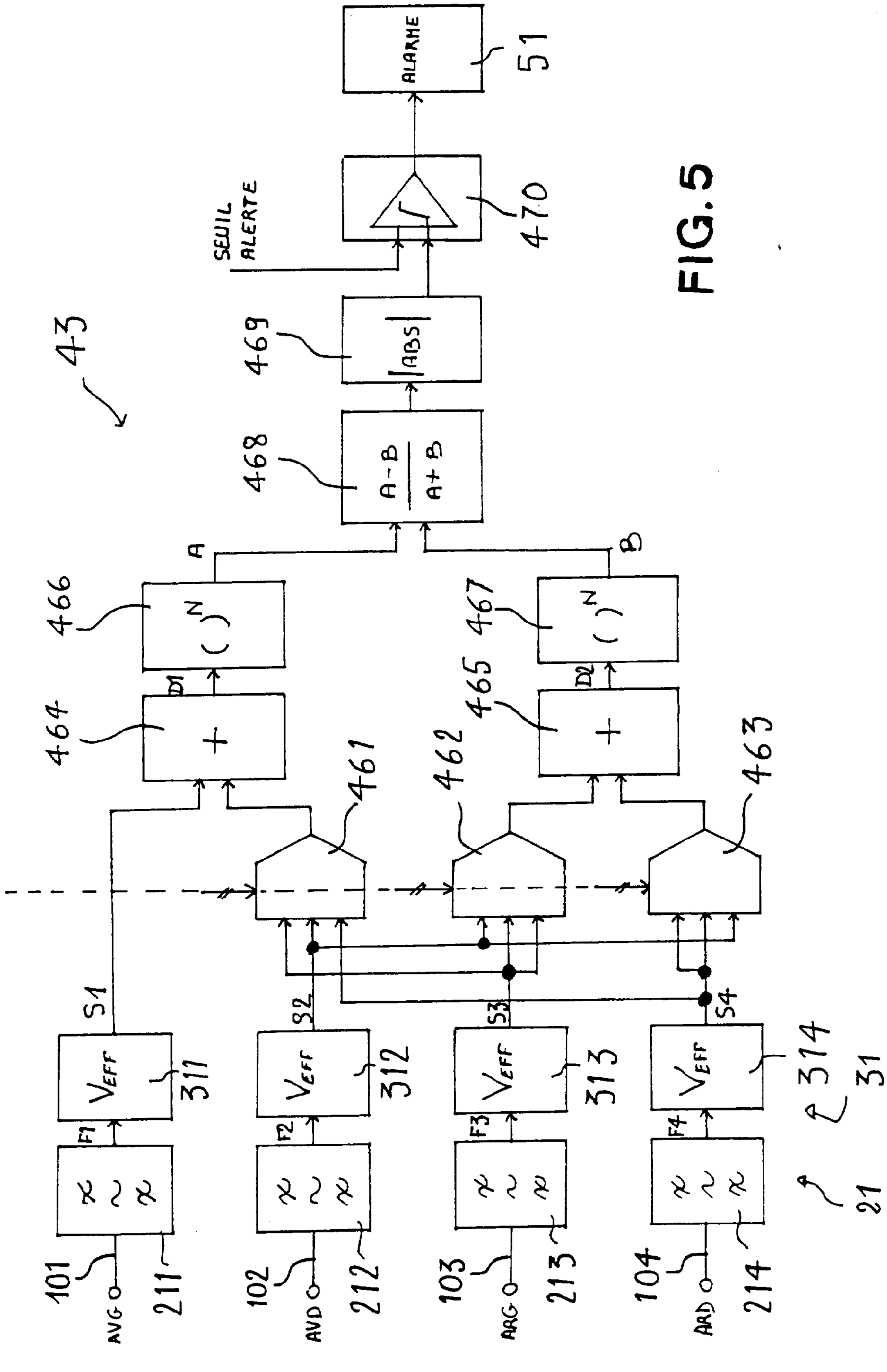
ALARME
51
SEUIL
ALERTE
470
469
|ABS|
468
A-B
A+B
43
A
B
466
467
464
465
D1
D2
461
462
463
S1
S2
S3
S4
311
312
313
314
31
F1
F2
F3
F4
211
212
213
214
21
101
102
103
104
AVG
AVD
ARG
ARD

FIG. 5

FIG.6

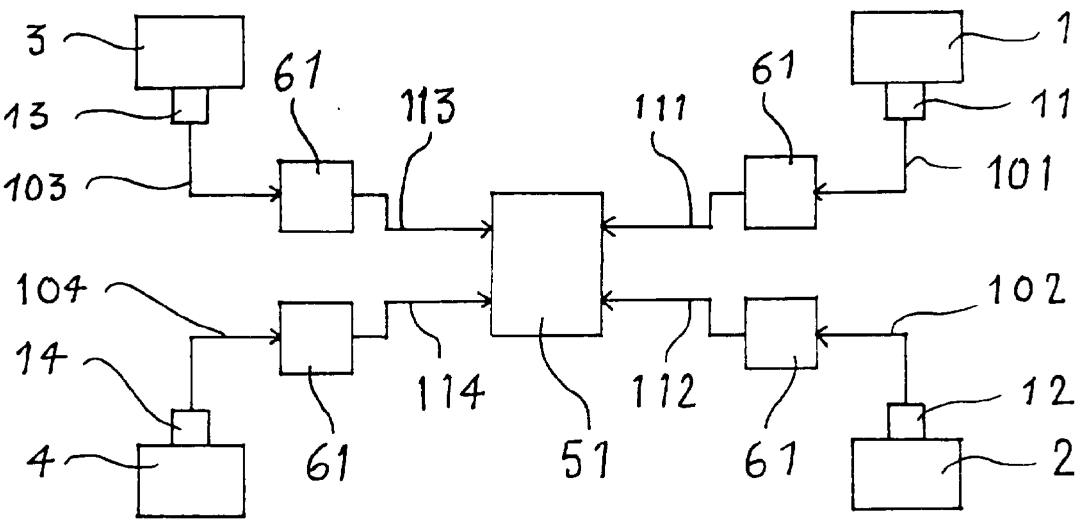
3
13
103
61
113
111
61
1
11
101
104
14
4
61
114
51
112
61
102
12
2

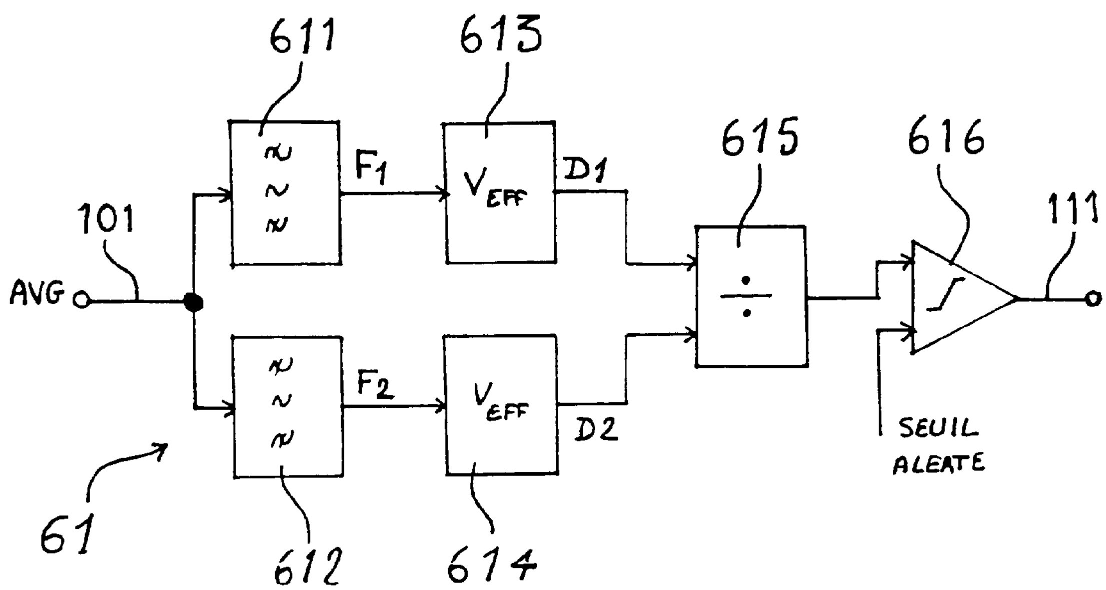
611
613
615
616
111
101
AVG
F1
F2
VEFF
VEFF
D1
D2
SEUIL
ALEATE
61
612
614

FIG.7